# EUROPÄISCHE PATENTANMELDUNG

(11) **EP 2 600 119 A1**
(43) Veröffentlichungstag der Anmeldung: **05.06.2013**
(21) Anmeldenummer: 12007664.1
(22) Anmeldetag: 12.11.2012
(51) Int. Cl.: G01F 1/58, G01F 15/14

(54) **Magnetisch-induktives Durchflussmessgerät**

(30) Priorität: 02.12.2011 DE 102011119982
(71) Anmelder: Krohne AG, 4019 Basel (CH)
(72) Erfinder: Neven, Josef, 26540 Mours St. Eusébe (FR)
(74) Vertreter: Gesthuysen, Michael

(57) **Zusammenfassung**

Dargestellt und beschrieben ist ein magnetisch-induktives Durchflussmessgerät (1) mit mindestens einem Messrohr (2), mit mindestens einer Magnetkreisvorrichtung (3a, 3b) zur Realisierung eines Magnetkreises und mit wenigstens zwei Elektroden (4) zur Erfassung einer Messspannung, wobei das Messrohr (2) einen Einströmabschnitt (2a), einen an den Einströmabschnitt (2a) anschließenden Messabschnitt (2b) und einen an den Messabschnitt (2b) anschließenden Ausströmabschnitt (2c) aufweist, wobei der Strömungsquerschnitt (Aₘ) des Messabschnitts (2b) sowohl kleiner ist als der einlassseitige Strömungsquerschnitt (Aₑ) des Einströmabschnitts (2a) als auch kleiner ist als der auslassseitige Strömungsquerschnitt (Aa) des Ausströmabschnitts (2c) und wobei die Elektroden (4) an oder in sich gegenüberstehenden Elektrodenabschnitten (5a, 5b) im Messabschnitt (2b) des Messrohrs (2) angeordnet sind.

Bei diesem magnetisch-induktiven Durchflussmessgerät mit einem Messrohr wird durch geometrisch-konstruktive Maßnahmen eine hohe Messempfindlichkeit und Messgenauigkeit erreicht, indem der Abstand (sₘ) zwischen den Elektrodenabschnitten (5a, 5b) im Messabschnitt (2b) des Messrohrs (2) größer ist als der Innendurchmesser (sₑ) des einlassseitigen Strömungsquerschnitts (Aₑ) des Einströmabschnitts (2a) des Messrohrs (2).

## Beschreibung

Die Erfindung betrifft ein Magnetisch-induktives Durchflussmessgerät mit mindestens einem Messrohr, mit mindestens einer Magnetkreisvorrichtung zur Realisierung eines Magnetkreises und mit wenigstens zwei Elektroden zur Erfassung einer Messspannung, wobei das Messrohr einen Einströmabschnitt, einen an den Einströmabschnitt anschließenden Messabschnitt und einen an den Messabschnitt anschließenden Ausströmabschnitt aufweist, wobei der Strömungsquerschnitt des Messabschnitts sowohl kleiner ist als der einlassseitige Strömungsquerschnitt des Einströmabschnitts als auch kleiner ist als der auslassseitige Strömungsquerschnitt des Ausströmabschnitts und wobei die Elektroden an oder in sich gegenüberstehenden Elektrodenabschnitten im Messabschnitt des Messrohrs angeordnet sind, Darüber hinaus betrifft die Erfindung auch ein derartiges Messrohr für ein magnetisch induktives Durchflussmessgerät.

Die messtechnische Grundlage für die Durchflussmessung mit einem an sich seit Jahrzehnten bekannten magnetisch induktiven Durchflussmessgerät bildet ein Messrohr aus einem nicht magnetischen Werkstoff, beispielsweise aus Kunststoff oder einem nicht magnetischen Metall. Das Messrohr ist zudem auf der Strömungsseite im Bereich des von der Magnetkreisvorrichtung erzeugten Magnetfeldes auch elektrisch nicht leitfähig oder ist durch eine isolierende Auskleidung elektrisch von dem Messfluid isoliert. Im Betrieb durchsetzt ein von der Magnetkreisvorrichtung erzeugtes Magnetfeld das Messrohr im Messabschnitt im Wesentlichen senkrecht zur Strömungsrichtung. Wird das Messrohr von einem Messfluid mit einer elektrischen Mindestleitfähigkeit durchflossen, werden die in dem leitfähigen Messfluid vorhandenen Ladungsträger durch das Magnetfeld abgelenkt. An senkrecht zum Magnetfeld und zur Strömungsrichtung angeordneten Elektroden entsteht durch die Ladungstrennung eine elektrische Potentialdifferenz, die mit einem Messgerät erfasst und als Messspannung ausgewertet wird. Die gemessene Spannung ist proportional zur Strömungsgeschwindigkeit der mit dem Messfluid bewegten Ladungsträger, so dass aus der Strömungsgeschwindigkeit auf den Durchfluss im Messrohr geschlossen werden kann.

Die Empfindlichkeit des magnetisch-induktiven Durchflussmessgeräts und die Genauigkeit der mit dem magnetisch induktiven Durchflussmessgerät durchführbaren Messung hängt u. a. ab von dem mit der Magnetkreisvorrichtung im Bereich des Messabschnitts des Messrohres erzeugten Magnetfeld, von der Geometrie des Messabschnitts und von der Anordnung der Elektroden. Die Geometrie der Anordnung entscheidet über die Homogenität des im Bereich des Messabschnitts erzeugten Magnetfelds, über die Strömungsverhältnisse des Messfluids im Messabschnitt und damit auch über das durch die Ladungstrennung erzeugte elektrische Feld im Messabschnitt, das Grundlage für die Messung ist. Die Abstimmung dieser verschiedenen Komponenten des magnetisch-induktiven Durchflussmessgeräts aufeinander ist entscheidend für die erzielbare Messgenauigkeit.

Es ist aus dem Stand der Technik bekannt, den Querschnitt des Messrohres über seine Längserstreckung hinweg - also über seine Erstreckung in Durchflussrichtung- zu variieren. Der einlassseitige Strömungsquerschnitt des Einströmabschnitts weist dabei üblicherweise die Geometrie des Prozessanschlusses auf, also üblicherweise einen kreisrunden Strömungsquerschnitt mit der Nennweite des Rohrs im Prozess, an das das magnetisch induktive Durchflussmessgerät anzuschließen ist. Entsprechendes gilt für den auslassseitigen Strömungsquerschnitt des Ausströmabschnitts, der ebenfalls dem Prozess zugewandt ist und an den Prozess anzuschließen ist. Wenn hier von "Strömungsquerschnitt" die Rede ist, dann ist damit immer die senkrecht zur Strömungsrichtung gemessene freie Querschnittsfläche des Messrohres zu verstehen, die der Strömung zur Verfügung steht, also ohne die Wandstärke des Messrohrs an der betreffenden Stelle.

Aus der DE 10 2008 057 755 A1 ist beispielsweise bekannt, dass sich der Strömungsquerschnitt des einlassseitigen Ende des Einströmabschnitts hin zu dem Messabschnitt verkleinert und sich der auslassseitige Strömungsquerschnitt des Messabschnitts dann wiederum auf den auslassseitigen Strömungsquerschnitt des Ausströmabschnitts des Messrohrs hin vergrößert Die Querschnittsveränderung hat den Vorteil, dass die Strömungsgeschwindigkeit des Messfluids im Bereich des Messabschnitts vergrößert wird und dernzufolge auch ein größerer Effekt für die Ladungstrennung aufgrund des Magnetfeldes im Messabschnitt erzielt wird.

Die veränderliche Querschnittsgeometrie des Messrohrs über seine Längserstreckung hinweg wird im Stand der Technik durch vergleichsweise aufwendige Fertigungstechniken erzielt, beispielsweise durch Gießen eines entsprechenden Metallmessrohrs, durch Innenhochdruckumformen oder durch Spritzgießen eines Kunststoffmessrohres. Der Herstellungsaufwand und die damit verbundenen Kosten lassen magnetisch induktive Durchflussmessgeräte für Massenanwendungen im Low-Cost-Bereich - beispielsweise als Hauswasserzähler - bislang nicht in Frage kommen. Dies liegt nicht nur an den mit dem Messrohr verbundenen Fertigungskosten, sondern auch an dem insgesamt verhältnismäßig anspruchsvolle geräte- und messtechnischen Aufbau eines magnetisch-induktiven Durchflussmessgeräts.

Aufgabe der vorliegenden Erfindung ist es, ein magnetisch-induktives Durchflussmessgerät mit einem Messrohr anzugeben, bei dem konstruktiv eine hohe Messempfindlichkeit und Messgenauigkeit unterstützt wird, wobei das Messrohr zudem vorzugsweise auf einfache Weise und damit kostengünstig herstellbar ist.

Die zuvor aufgezeigte und hergeleitete Aufgabe ist bei einem magnetisch-induktiven Durchflussmessgerät mit dem zuvor beschriebenen Messrohr dadurch gelöst, dass der Abstand zwischen den Elektrodenabschnitten im Messabschnitt des Messrohrs größer ist als der größte Innendurchmesser des einlassseitigen Strömungsquerschnitts des Einströmabschnitts des Messrohrs. Mit dem Abstand zwischen den Elektrodenabschnitten im Messabschnitt des Messrohrs ist der Abstand von Wand zu Wand des Messrohres in den Abschnitten gemeint, in denen die Elektroden vorgesehen sind, unbeachtlich isolierender Auskleidungen des Messrohres in diesem Abschnitt und auch unbeachtlich möglicher Ausnehmungen im Messrohr, in die die Elektroden eingelassen sind. Wenn von "dem" Innendurchmesser des einlassseitigen Strömungsquerschnitts des Einströmabschnitts die Rede ist, dann wird davon ausgegangen, dass der einlassseitige Strömungsquerschnitt des Einströmabschnitts eine Kreisfläche ist, was sich allein daraus ergibt, dass magnetisch-induktive Durchflussmessgeräte an Rohre mit einem kreisförmigen Querschnitt des Prozesssystems angeschlossen werden müssen, und damit - im Gegensatz zum Strömungsquerschnitt im Messabschnitt- kreisförmige bzw. kreisflächige Strömungsquerschnitte aufweisen und damit dort auch nur einen einzigen Innendurchmesser besitzen.

Durch den großen Abstand zwischen den Elektrodenabschnitten im Messabschnitt des Messrohrs wird die der Ladungstrennung zur Verfügung stehende Strecke über das bislang bekannte Maß hinaus erweitert, wobei von zusätzlicher Bedeutung ist, dass auch jene Fläche über das bekannte Maß hinaus vergrößert wird, über die in das Medium ein Magnetfeld eingebracht werden kann. Denn üblicherweise sind Polschuhe der Magnetkreisvorrichtung an den Wandabschnitten des Messabschnitts vorgesehen, die senkrecht zu den Elektrodenabschnitten im Messabschnitt des Messrohrs stehen. Durch diese Maßnahme wird die Empfindlichkeit des magnetisch-induktiven Durchflussmessgeräts auf gemetrisch-konstruktive Weise erhöht und auch die Messgenauigkeit wird positiv beeinflusst, da bei einem derart großen Abstand zwischen Elektrodenabschnitten auch Gelegenheit besteht, über große Teile des Volumens im Messabschnitt ein weitgehend homogenes Magnetfeld zu erzeugen.

Bei einer Weiterbildung des erfindungsgemäßen magnetisch-induktiven Durchflussmessgeräts bzw. dessen Messrohrs ist vorgesehen, dass der Strömungsquerschnitt des Messabschnitts im Wesentlichen rechteckig ist und ein Längen/Breiten-Verhältnis von größer 3:1, vorzugsweise von größer 3,5:1 aufweist. In den angegebenen Längen/Breiten-Verhältnissen ist als Länge der Abstand zwischen den Elektrodenabschnitten im Messabschnitt des Messrohrs zu verstehen. Insgesamt resultiert bei Einhaltung dieser Auslegungsvorschrift ein ungewohnt flacher Strömungskanal, der Strömungsverhältnisse begünstigt, die sich positiv auf die Messgenauigkeit auswirken. Die kurzen - die "Breite" definierenden - Wände beherbergen dabei die Elektrodenabschnitte, und an den im Wesentlichen senkrecht dazu stehenden "langen" Wänden werden vorzugsweise die sich gegenüberstehenden Pole der Magnetkreisvorrichtung angeordnet. Besonders gute Ergebnisse konnten erzielt werden mit einem Längen/Breiten-Verhältnis von 3,74:1.

Bei einer bevorzugten Ausgestaltung des magnetisch-induktiven Durchflussmessgeräts bzw. des Messrohrs für dieses Durchflussmessgerät ist vorgesehen, dass das Verhältnis des einlassseitigen Strömungsquerschnitts des Einströrnabschnitts zu dem Strömungsquerschnitt des Messabschnitts größer ist als 1,8:1, vorzugsweise sogar größer ist als 2,0:1 und ganz besonders bevorzugt größer ist als 2,2:1. Es hat sich herausgestellt, dass sich bei dem großen Abstand zwischen den Elektrodenabschnitten im Messabschnitt des Messrohrs eine verhältnismäßig rasche Verjüngung des Strömungsquerschnitts realisieren lässt, ohne dass dadurch die Strömung im Messabschnitt des Messrohrs negativ beeinflusst ist, was insbesondere in Zusammenhang mit dem zuvor angegebenen Längen/Breiten-Verhältnis des Strörnungsquerschnitts im Messabschnitt gilt.

Das erfindungsgemäße magnetisch-induktive Durchflussmessgerät ist grundsätzlich geeignet zum Einsatz für alle anschlussseitigen Nennweiten, jedoch liegt eine besondere Eignung für anschlussseitige Nennweiten des Messrohrs vor, die kleiner als einige 10 mm sind, insbesondere kleiner als 40 mm, was daran liegt, dass die über die Außenabmessung des einlassseitigen Strömungsquerschnitts hinausgehende Erstreckung des Messabschnitts zwischen den Elektrodenabschnitten bei derartig kleinen magnetisch induktiven Durchflussmessgeräten als nicht störend empfunden wird, da beispielsweise ein Gehäuse problemlos so groß angefertigt werden kann, dass es auch die etwas ausladende Geometrie des Messabschnitts noch umfasst, was bei magnetisch-induktiven Durchflussmessgeräten mit erheblich größeren Nenndurchmessern möglicherweise problematisch ist.

Im Einzelnen gibt es nun eine Vielzahl von Möglichkeiten, das erfindungsgemäße magnetisch-induktive Durchflussmessgerät bzw, das erfindungsgemäße Messrohr für ein solches Durchflussmessgerät auszugestalten und weiterzubilden. Dazu wird verwiesen auf die dem Patentanspruch 1 nachgeordneten Patentansprüche sowie auch die Beschreibung von bevorzugten Ausführungsbeispielen in Verbindung mit der Zeichnung. In der Zeichnung zeigen
- Fig. 1: ein magnetisch-induktives Durchflussmessgerät,
- Fig. 2: das Messrohr des magnetisch-induktiven Durchflussmessgeräts gemäß Fig. 1 in Schnittdarstellung,
- Fig. 3: das Messrohr gemäß Fig. 2 in einer weiteren Seitenansicht in Schnittdarstellung und
- Fig. 4: den Querschnitt des Messabschnitts des Messrohres gemäß den Fig. 1 bis 3 im Bereich der Elektroden.

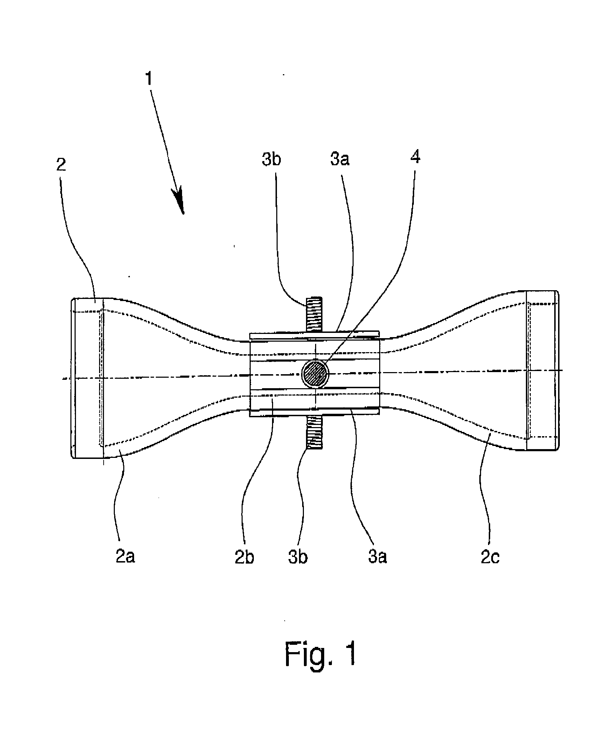

In Fig. 1 ist dargestellt ein magnetisch-induktives Durchflussmessgerät 1 mit einem Messrohr 2 und mit einer Magnetkreisvorrichtung 3 zur Realisierung eines Magnetkreises und mit zwei Elektroden, von denen nur eine Elektrode 4 in der Darstellung sichtbar ist. Die Elektroden 4 dienen zur Erfassung einer Messspannung, die sich dann einstellt, wenn ein leitfähiges Medium durch das Messrohr 2 strömt, wobei sich dann in dem Medium eine Ladungstrennung in Richtung auf die Elektroden 4 einstellt, wenn die Magnetkreisvorrichtung 3 senkrecht zur Strömungsrichtung und senkrecht zur gedachten Achse der sich gegenüberstehenden Elektroden 4 ein Magnetfeld erzeugt. In dem in Fig. 1 dargestellten Ausführungsbeispiel besteht die Magnetkreisvorrichtung 3 aus zwei sich gegenüberstehenden Polplatten 3a mit jeweils einer Spule 3b, die von einer hier nicht näher dargestellten Ansteuerelektronik bestromt werden. Ebenfalls nicht explizit dargestellt ist der magnetische Schluss der Magnetkreisvorrichtung, was vorliegend aber auch nicht von Bedeutung ist.

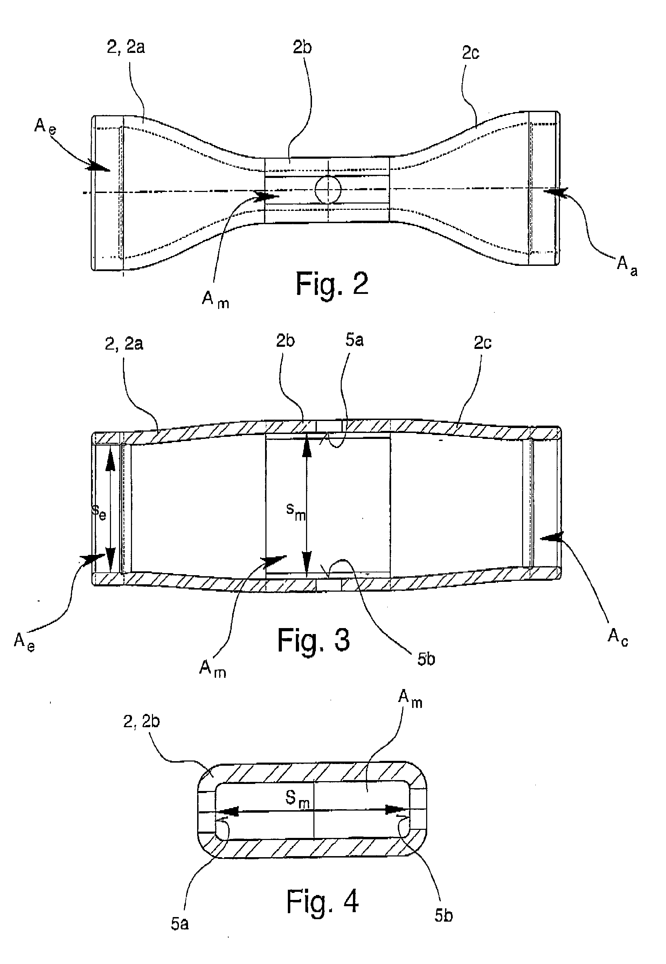

In den Fig. 2 bis 4 ist im Unterschied zu Fig. 1 ausschließlich nur noch das Messrohr dargestellt, um dessen konstruktiven Besonderheiten hervorzuheben.

In den Fig. 1 bis 4 weist das Messrohr 2 einen Einströmabschnitt 2a, einen an den Einströmabschnitt 2a anschließenden Messabschnitt 2b und einen an den Messabschnitt 2b anschließenden Ausströmabschnitt 2c auf. Wie ohne weiteres zu erkennen ist, ändert sich der Strömungsquerschnitt A des Messrohrs 2 über die Längserstreckung des Messrohrs 2, also in Durchströmungsrichtung, beträchtlich. Der Strömungsquerschnitt Aₘ des Messabschnitts 2b ist sowohl kleiner als der einlassseitige Strömungsquerschnitt A_{c} des Einströmabschnitts 2a als auch kleiner als der auslassseitige Strömungsquerschnitt Aₐ des Ausströmabschnitts 2c.

Die Elektroden 4 sind an oder in sich gegenüberstehenden Elektrodenabschnitten 5a, 5b im Messabschnitt 2b des Messrohrs 2 angeordnet, wo sie die sich durch Ladungstrennung ergebenden elektrischen Potentiale abgreifen und als Messspannung schließlich verfügbar machen.

Wie insbesondere gut anhand von Fig, 3 erkennbar ist, zeichnet sich das in den Figuren dargestellte Messrohr 2 dadurch aus, dass der Abstand sₘ zwischen den Elektrodenabschnitten 5a, 5b im Messabschnitt 2b des Messrohrs 2 größer ist als der Innendurchmesser s_{c} des einlassseitigen Strömungsquerschnitts Aₑ des Einströmabschnitts 2a des Messrohrs 2. Indem der Abstand sₘ zwischen den Elektrodenabschnitten 5a, 5b im Messabschnitt 2b gegenüber dem Innendurchmesser s_{c} des einlassseitigen Strömungsquerschnitts A_{c} vergrößert wird, vergrößert sich auch die Strecke der wirksamen Ladungstrennung und damit die wirksame Messempfindlichkeit des magnetisch-induktiven Durchflussmessgeräts 1. Mit der Verbreiterung des Strömungsquerschnitts erhöht sich gleichzeitig auch die mögliche Auflage- und Wirkfläche für die Polschuhe 3a der Magnetkreisvorrichtung 3.

Wie anhand von Fig. 4 deutlich zu erkennen ist, wie sich aber auch aus Zusammenschau der Figuren 2 und 3 ergibt, ist der Strömungsquerschnitt Aₘ des Messabschnitts 2b im Wesentlichen rechteckig und weist im vorliegenden Fall ein Längen/Breiten-Verhältnis von etwa 3,7 auf, der Abstand sₘ zwischen den Elektrodenabschnitten 5a, 5b ist in diesem Ausführungsbeispiel also knapp viermal größer als die Höhe des lichten Querschnitts. Bei einem derartig ausgestalteten Strömungsquerschnitt Aₘ des Messabschnitts 2b wird ein günstiges Strömungsprofil erreicht, was sich vorteilhaft auf die erzielbare Messgenauigkeit auswirkt. "Im Wesentlichen rechteckig" bedeutet in diesem Zusammenhang, dass der Strömungsquerschnitt Am des Messabschnitts 2b größtenteils durch paarweise parallel zueinander verlaufende Wandflächen berandet ist, selbstverständlich die Wandflächen aber an den Stoßstellen nur unter einem gewissen Krümmungsradius ineinander übergehen. Der Strömungsquerschnitt Am des Messabschnitts 2b ist in dem dargestellten Ausführungsbeispiel über die Längserstreckung des Messabschnitts 2b unverändert, so dass sich in dem Messabschnitt 2b eine ruhige Strömung ohne unnötige Störungen einstellen kann.

Bei dem in den Figuren insgesamt dargestellten Ausführungsbeispiel beträgt das Verhältnis des einlassseitigen Strömungsquerschnitts A_{c} des Einströmabschnitts 2a zu dem Strömungsquerschnitt Am des Messabschnitts 2b etwa 2,2, es wird also eine erhebliche Reduktion des Strömungsquerschnitts bewirkt, wobei sich die dargestellte konstruktive Auslegung dadurch auszeichnet, dass das Strömungsprofil gleichwohl und besonders für eine hochwertige Durchflussmessung geeignet ist.

Der Einströmabschniit 2a ist insgesamt so ausgeformt, dass er in einem einzigen zusammenhängenden Reduzierbereich einen stetig abnehmenden Strömungsquerschnitt aufweist, also ohne Sprünge im Querschnitt und auch ohne Phasen der Verharrung in einem konstanten Strömungsquerschnitt. Gleiches gilt sinngemäß für den Ausströmabschnitt 2c, der in einem einzigen, zusammenhängenden Expansionsbereich einen stetig zunehmenden Strömungsquerschnitt aufweist, der schließlich in dem auslassseitigen Strömungsquerschnitt Aₐ endet, der dann über eine geringe Distanz konstant gehalten wird, dieser Bereich des konstanten Ausströmquerschnitts A_{B} zählt jedoch nicht mehr zum Expansionsbereich.

Die Ausgestaltung des Messabschnitts 2b des Messrohrs 2 erlaubt eine besonders kurze Bauweise des gesamten Messrohrs 2. In dem in den Figuren dargestellten Ausführungsbeispiel ist das Verhältnis der Längserstreckung des Messabschnitts 2b zur Längserstreckung des Reduzierbereichs und das Verhältnis der Längserstreckung des Messabschnitts 2b zur Längserstreckung des Expansionsbereichs bei etwa 0,9 angesiedelt. Die anschlussseitige Nennweite des Messrohrs 2 beträgt 15 mm und der Abstand sₘ zwischen den Elektrodenabschnitten 5a, 5b beträgt in dem dargestellten Ausführungsbeispiel 17,2 mm. Das Durchflussmessgerät ist mit den dargestellten Abmessungen beispielsweise besonders prädestiniert für den Einsatz zur Erfassung des Wasserverbrauchs in haushaltsüblichen Mengen, also als Haushaltswasserzähler.

Vorliegend ist das Messrohr 2 aus einem Metallrohr aus nicht-magnetischem Material gefertigt, wobei der Reduzierbereich des Einlassabschnitts 2a, der Expansionsbereich des Auslassabschnitts 2c und der Messbereich 2b spanlos durch von außen auf das Rohr wirkende Kräfte hergestellt sind, die Rohrgeometrie lässt sich also auf sehr einfache Weise ohne aufwendige Herstellungsverfahren wie Gießen oder Innenhochdruckumformen herstellen, so dass die Fertigungskosten im Vergleich zu aus dem Stand der Technik bekannten Messrohren für die dargestellten magnetisch-induktive Durchfiussmessgeräte sehr niedrig sind und damit auch ein Einsatz derartiger magnetisch-induktiver Durchflussmessgeräte mit derartigen Messrohren für Massenanwendungen im Low-Cost-Bereich in Betracht kommt.

In den Fig. 1 bis 3 ist zu erkennen, dass das Messrohr 2 im Messabschnitt 2b über eine nicht leitfähige Auskleidung 6 verfügt, die in anderen Ausführungsbeispielen entfallen kann, bei denen das Messrohr selbst elektrisch nicht leitfähig ist.

## Patentansprüche

1. Magnetisch-induktives Durchflussmessgerät (1) mit mindestens einem Messrohr (2), mit mindestens einer Magnetkreisvorrichtung (3a, 3b) zur Realisierung eines Magnetkreises und mit wenigstens zwei Elektroden (4) zur Erfassung einer Messspannung, wobei das Messrohr (2) einen Einströmabschnitt (2a), einen an den Einströmabschnitt (2a) anschließenden Messabschnitt (2b) und einen an den Messabschnitt (2b) anschließenden Ausströmabschnitt (2c) aufweist, wobei der Strömungsquerschnitt (Aₘ) des Messabschnitts (2b) sowohl kleiner ist als der einlassseitige Strömungsquerschnitt (A_{c}) des Einströmabschnitts (2a) als auch kleiner ist als der auslassseitige Strömungsquerschnitt (Aₐ) des Ausströmabschnitts (2c), und wobei die Elektroden (4) an oder in sich gegenüberstehenden Elektrodenabschnitten (5a, 5b) im Messabschnitt (2b) des Messrohrs (2) angeordnet sind,
**dadurch gekennzeichnet;**
**dass** der Abstand (sₘ) zwischen den Elektrodenabschnitten (5a, 5b) im Messabschnitt (2b) des Messrohrs (2) größer ist als der Innendurchmesser (s_{c}) des einlassseitigen Strömungsquerschnitts (A_{c}) des Einströmabschnitts (2a) des Messrohrs (2).

2. Magnetisch-induktives Durchflussmessgerät (1) nach Anspruch 1, **dadurch gekennzeichnet, dass** der Strömungsquerschnitt (Aₘ) des Messabschnitts (2b) im Wesentlichen rechteckig ist und ein Längen/Breiten-Verhältnis von größer 3;1, vorzugsweise von größer 3,5:1, besonders bevorzugt von 3,74:1 aufweist.

3. Magnetisch-induktives Durchflussmessgerät (1) nach Anspruch 1 oder 2, **dadurch gekennzeichnet, dass** der Strömungsquerschnitt (Aₘ) des Messabschnitts (2b) über die Längserstreckung des Messabschnitts (2b) unverändert ist.

4. Magnetisch-induktives Durchflussmessgerät (1) nach einem der Ansprüche 1 bis 3, **dadurch gekennzeichnet, dass** das Verhältnis des einlassseitigen Strömungsquerschnitts (A_{c}) des Einströmabschnitts (2a) zu dem Strömungsquerschnitt (Aₘ) des Messabschnitts (2b) größer ist als 1,8:1, bevorzugt größer ist als 2,0;1, besonders bevorzugt etwa 2,2:1, beträgt.

5. Magnetisch-induktives Durchflussmessgerät (1) nach einem der Ansprüche 1 bis 4, **dadurch gekennzeichnet, dass** der Einströmabschnitt (2a) in einem einzigen, zusammenhängenden Reduzierbereich einen stetig abnehmenden Strömungsquerschnitt aufweist.

6. Magnetisch-induktives Durchflussmessgerät (1) nach einem der Ansprüche 1 bis 5, **dadurch gekennzeichnet, dass** der Ausströmabschnitt (2c) in einem einzigen, zusammenhängenden Expansionsbereich einen stetig zunehmenden Strömungsquerschnitt aufweist.

7. Magnetisch-induktives Durchflussmessgerät (1) nach Anspruch 5 oder 6, **dadurch gekennzeichnet, dass** das Verhältnis der Längserstreckung des Messabschnitts (2b) zur Längserstreckung des Reduzierbereiches und/oder das Verhältnis der Längserstreckung des Messabschnitts (2b) zur Längserstreckung des Expansionsbereichs kleiner als 1,1;1, insbesondere kleiner als 1,0:1, insbesondere kleiner als 0,9:1, insbesondere 0,89:1 beträgt.

8. Magnetisch-induktives Durchflussmessgerät (1) nach einem der Ansprüche 1 bis 7, **dadurch gekennzeichnet, dass** die anschlussseitige Nennweite des Messrohrs (2) kleiner als 40 mm ist, bevorzugt kleiner als 30 mm ist, insbesondere gleich 15 mm ist.

9. Magnetisch-induktives Durchflussmessgerät (1) nach einem der Ansprüche 1 bis 8, **dadurch gekennzeichnet, dass** das Messrohr (2) aus einem Metallrohr aus nicht-magnetischem Material gefertigt ist, wobei der Reduzierbereich des Einlassabschnitts (2a), der Expansionsbereich des Auslassabschnitts (2c) und der Messbereich (2b) spanlos durch von außen auf das Metallrohr wirkende Kräfte hergestellt sind.

10. Messrohr (2) für ein magnetisch-induktives Durchflussmessgerät (1), wobei das Messrohr (2) einen Einströmabschnitt (2a), einen an den Einströmabschnitt (2a) anschließenden Messabschnitts (2b) und einen an den Messabschnitt (2b) anschließenden Ausströmabschnitt (2c) aufweist und wobei der Strömungsquerschnitt (Aₘ) des Messabschnitts (2b) sowohl kleiner ist als der einlassseitige Strömungsquerschnitt (A_{c}) des Einströmabschnitt (2a) als auch kleiner ist, als der auslassseitige Strömungsquerschnitt (Aₐ) der Ausströmabschnitts (2c), wobei Ausnehmungen für Elektroden in sich gegenüberstehenden Elektrodenabschnitten (5a, 5b) im Messabschnitts (2b) des Messrohrs (3) vorgesehen sind,
**gekennzeichnet durch,**
die Merkmale des Kennzeichnungsteils wenigstens eines Anspruchs der Ansprüche 1 bis 9.
